(19) Europäisches Patentamt
European Patent Office
Office européen des brevets

(11) **EP 3 297 124 A1**

(12) **EUROPEAN PATENT APPLICATION**
published in accordance with Art. 153(4) EPC

(43) Date of publication:
**21.03.2018 Bulletin 2018/12**

(51) Int Cl.:
**H02J 50/00** *(2016.01)*     **H02J 7/02** *(2016.01)*

(21) Application number: **16792885.2**

(22) Date of filing: **02.05.2016**

(86) International application number:
**PCT/KR2016/004583**

(87) International publication number:
**WO 2016/182239 (17.11.2016 Gazette 2016/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.05.2015 KR 20150065285**

(71) Applicant: **LG Innotek Co., Ltd.**
**Seoul, 04637 (KR)**

(72) Inventors:
• **PARK, Soo Young**
  **Seoul 04634 (KR)**
• **PARK, Su Bin**
  **Seoul 04634 (KR)**
• **LEE, Jong Heon**
  **Seoul 04634 (KR)**

(74) Representative: **DREISS Patentanwälte PartG mbB**
**Friedrichstrasse 6**
**70174 Stuttgart (DE)**

(54) **WIRELESS POWER TRANSMISSION APPARATUS AND CONTROL METHOD THEREFOR, METHOD FOR CONTROLLING WIRELESS POWER RECEPTION APPARATUS, AND WIRELESS POWER TRANSMISSION SYSTEM AND WIRELESS POWER TRANSMISSION METHOD THEREFOR**

(57)     Disclosed is a wireless power transmission apparatus. The present apparatus comprises: a first wireless power transmission unit which is connected to a first sensing unit to wirelessly transmit power to a wireless power reception apparatus; a second wireless power transmission unit which is connected to a second sensing unit; and a control unit for controlling the second sensing unit to sense induced current which is induced to the second wireless power transmission unit if the wireless power reception apparatus moves in the direction of the second wireless power transmission unit while power is being wirelessly transmitted to the wireless power reception apparatus, wherein the control unit can wirelessly transmit power to the wireless power reception apparatus through the second wireless power transmission unit if the magnitude of the sensed induced current exceeds a predetermined reference level. Accordingly, apparatus efficiency and user convenience can be improved.

Start

Transmit wireless power to wireless power reception apparatus through first wireless power transmission unit — S910

Sense induced current induced in second wireless power transmission unit when the wireless power reception unit is moved toward the second wireless power transmission unit — S920

Transmit wireless power to the wireless power reception apparatus through the second wireless power transmission unit when the magnitude of the sensed induced current meets preset criterion — S930

End

FIG.12

# Description

[Technical Field]

Embodiments relate to a wireless power transmission apparatus and a control method therefor, a method for controlling a wireless power reception apparatus, and a wireless power transmission system and a wireless power transmission method therefor, and more particularly, to a wireless power transmission apparatus having a plurality of charging transmission units and a control method therefor, a method for controlling a wireless power reception apparatus, and a wireless power transmission system including a plurality of charging apparatuses and a wireless power transmission method therefor.

[Background Art]

Recently, as information and communication technology rapidly develops, a ubiquitous society based on information and communication technology is being formed.

In order for information communication devices to be connected anywhere and anytime, sensors equipped with a computer chip having a communication function should be installed in all facilities throughout society. Accordingly, power supply to these devices or sensors is becoming a new challenge. In addition, as the types of mobile devices such as Bluetooth handsets and iPods, as well as mobile phones, rapidly increase in number, charging batteries requires time and effort. As a way to address this issue, wireless power transmission technology has recently drawn attention.

Wireless power transmission (or wireless energy transfer) is a technology for wirelessly transmitting electric energy from a transmitter to a receiver using the induction principle of a magnetic field. Back in the 1800s, electric motors and transformers based on the principle of electromagnetic induction began to be used. Thereafter, a method of transmitting electric energy by radiating electromagnetic waves such as radio waves or lasers was tried. The principle of electromagnetic induction also forms the basis of charging electric toothbrushes we often use and some wireless shavers.

Up to now, wireless energy transmission schemes may be broadly classified into electromagnetic induction, electromagnetic resonance, and power transmission using a short-wavelength radio frequency.

In the electromagnetic induction scheme, when two coils are arranged adjacent to each other and a current is applied to one of the coils, a magnetic flux generated at this time generates electromotive force in the other coil. This technology is being rapidly commercialized mainly for small devices such as mobile phones. In the electromagnetic induction scheme, power of up to several hundred kilowatts (kW) may be transmitted with high efficiency, but the maximum transmission distance is 1 cm or less. As a result, the device should generally be arranged adjacent to the charger or the floor.

The electromagnetic resonance scheme uses an electric field or a magnetic field instead of using an electromagnetic wave or current. The electromagnetic resonance scheme is advantageous in that the scheme is safe to other electronic devices or the human body since it is hardly influenced by the electromagnetic waves. However, this scheme may be used only at a limited distance and in a limited space, and has somewhat low energy transfer efficiency.

The short-wavelength wireless power transmission scheme (simply, RF scheme) takes advantage of the fact that energy can be transmitted and received directly in the form of radio waves. This technology is an RF power transmission scheme using a rectenna. A rectenna, which is a compound of "antenna" and "rectifier", refers to a device that converts RF power directly into direct current (DC) power. That is, the RF method is a technology for converting AC radio waves into DC waves. Recently, with improvement in efficiency, commercialization of RF technology has been actively researched. Wireless power transmission technology can be applied not only to the mobile industry, but also to various industries such as IT, railroad, and home appliances.

In the related art, a wireless power transmission apparatus including a plurality of coils has been disclosed to transmit power to a wireless power reception apparatus. However, there is a need for a technique for enabling a wireless power transmission apparatus to more efficiently transmit power to a wireless power reception apparatus.

[Disclosure]

[Technical Problem]

Embodiments provide a wireless power transmission apparatus including a plurality of power transmission units.

Embodiments further provide a wireless power transmission apparatus for accurately recognizing a wireless power reception apparatus and performing wireless charging.

Embodiments further provide a wireless power transmission apparatus for searching for a wireless power reception apparatus more efficiently.

Embodiments further provide a wireless power transmission apparatus for automatically searching for a wireless power reception apparatus and transmitting wireless power thereto when the wireless power reception apparatus is moved while being charged.

Embodiments further provide a wireless power transmission method using a plurality of wireless power transmission apparatuses.

The technical objects that can be achieved through the embodiments are not limited to what has been particularly described hereinabove and other technical objects not described herein will be more clearly understood by persons skilled in the art from the following detailed description.

[Technical Solution]

In one embodiment, a method of controlling a wireless power transmission apparatus including a plurality of wireless power transmission units may include transmitting wireless power to a wireless power reception apparatus through a first wireless power transmission unit, sensing an induced current induced in a second wireless power transmission unit when the wireless power reception unit is moved toward the second wireless power transmission unit, and transmitting wireless power to the wireless power reception apparatus through the second wireless power transmission unit when a magnitude of the induced current sensed in the second wireless power transmission unit meets a preset criterion.

The transmitting of the wireless power to the wireless power reception apparatus through the first wireless power transmission unit may include transmitting the wireless power to the wireless power reception apparatus according to an electromagnetic induction scheme using a current applied to the first wireless power transmission unit.

The transmitting of the wireless power to the wireless power reception apparatus through the second wireless power transmission unit may include seamlessly transmitting the wireless power to the wireless power reception apparatus even when a transmission channel is changed from the first wireless power transmission unit to the second wireless power transmission unit.

The method may further include stopping transmitting the wireless power through the first wireless power transmission unit when the wireless power is transmitted to the wireless power reception apparatus through the second wireless power transmission unit.

The transmitting of the wireless power to the wireless power reception apparatus through the second wireless power transmission unit may include transmitting the wireless power to the wireless power reception apparatus through the first wireless power transmission unit while transmitting the wireless power to the wireless power reception apparatus through the second wireless power transmission unit.

The method may further include transmitting a notification signal to the wireless power reception apparatus when a wireless power transmission channel is changed to the second wireless power transmission unit.

In another embodiment, a wireless power transmission apparatus including a plurality of wireless power transmission units may include a first wireless power transmission unit connected to a first sensing unit to transmit wireless power to a wireless power reception apparatus, a second wireless power transmission unit connected to a second sensing unit, a controller configured to control the second sensing unit to sense an induced current induced in the second wireless power transmission unit when the wireless power reception apparatus is moved toward the second wireless power transmission unit while the wireless power is being transmitted to the wireless power reception apparatus, wherein the controller may transmit the wireless power to the wireless power reception apparatus through the second wireless power transmission unit when a magnitude of the sensed induced current exceeds a preset reference.

The controller may transmit the wireless power to the wireless power reception apparatus according to an electromagnetic induction scheme using a current applied to the first wireless power transmission unit.

The controller may seamlessly transmit the wireless power to the wireless power reception apparatus even when a transmission channel is changed from the first wireless power transmission unit to the second wireless power transmission unit.

When the wireless power is transmitted to the wireless power reception apparatus through the second wireless power transmission unit, the controller may stop transmitting the wireless power through the first wireless power transmission unit.

The controller may transmit the wireless power to the wireless power reception apparatus through the first wireless power transmission unit while transmitting the wireless power to the wireless power reception apparatus through the second wireless power transmission unit.

The controller may transmit a notification signal to the wireless power reception apparatus when a wireless power transmission channel is changed to the second wireless power transmission unit.

In another embodiment, a method for controlling a wireless power transmission apparatus including a plurality of wireless power transmission units may include transmitting wireless power to a wireless power reception apparatus through at least one of the wireless power transmission units, sensing, when the wireless power reception apparatus is moved in a specific direction during transmission of the wireless power, an induced current induced in each of at least one of the wireless power transmission units arranged on a side corresponding to the specific direction, and transmitting, when a magnitude of the induced current sensed in at least one of the wireless power transmission units arranged on the side corresponding to the specific direction exceeds a preset reference, the wireless power to the wireless power reception apparatus through the at least one wireless power transmission unit having the induced current exceeding the preset reference.

In another embodiment, a wireless power transmission apparatus including a plurality of wireless power transmission units may include at least one first wireless power transmission unit configured to transmit wireless power to a wireless power reception apparatus, at least one second wireless power transmission unit arranged on a side corresponding to a specific direction and connected to each of at least one sensing unit in a one-to-one correspondence manner, and a controller configured to sense, when the wireless power reception apparatus is moved in the specific direction during transmission of the wireless power, an induced current induced in at least one of the at least one second wireless power transmission unit, through at least one of the at least one sensing unit, wherein, when a magnitude of the induced current sensed in at least one of the at least one second wireless power transmission unit arranged on the side corresponding to the specific direction exceeds a preset reference, the controller may transmit the wireless power to the wireless power reception apparatus through the at least one wireless power transmission unit having the induced current exceeding the preset reference.

In another embodiment, a method for controlling a wireless power reception apparatus for receiving wireless power from a wireless power transmission apparatus including a plurality of wireless power transmission units may include receiving the wireless power from the wireless power transmission apparatus, and broadcasting a command signal when a reception efficiency of the received wireless power is less than a preset reference value.

In another embodiment, a method for controlling a wireless power transmission apparatus including a plurality of wireless power transmission units may include receiving, by at least one of the wireless power transmission units, a command signal transmitted from a wireless power reception apparatus, measuring a reception sensitivity of each of the at least one wireless power transmission unit receiving the command signal, and transmitting the wireless power to the wireless power reception apparatus using a specific wireless power transmission unit having the measured reception sensitivity that meets a predetermined criterion.

In another embodiment, a method for transmitting wireless power in a wireless power transmission system including a plurality of wireless power transmission apparatuses may include transmitting the wireless power to a wireless power reception apparatus through a first wireless power transmission apparatus, sensing, when the wireless power reception apparatus is moved toward a second wireless power transmission apparatus during transmission of the wireless power, an induced current induced in the second wireless power transmission apparatus, and transmitting, when a magnitude of an induced current sensed in the second wireless power transmission apparatus meets a preset criterion, the wireless power to the wireless power reception apparatus through the second wireless power transmission apparatus.

The method may further include the second wireless power transmission apparatus receiving device information about the wireless power reception apparatus from the first wireless power transmission apparatus.

In another embodiment, a wireless power transmission system including a plurality of wireless power transmission apparatuses may include a first wireless power transmission apparatus configured to transmit wireless power to a wireless power reception apparatus, and a second wireless power transmission apparatus disposed on a side corresponding to a direction of movement of the wireless power reception apparatus to sense an induced current when the wireless power reception apparatus is moved during transmission of the wireless power, wherein, when a magnitude of the sensed induced current meets a predetermined criterion, the wireless power transmission apparatus may transmit the wireless power to the wireless power reception apparatus.

The second wireless power transmission apparatus may receive device information about the wireless power reception apparatus from the first wireless power transmission apparatus.

The above-described aspects of the present disclosure are merely a part of preferred embodiments of the present disclosure. Those skilled in the art will derive and understand various embodiments reflecting the technical features of the present disclosure from the following detailed description of the present disclosure.

[Advantageous Effects]

According to embodiments, a wireless power transmission apparatus including a plurality of power transmission units is provided.

In addition, a wireless power reception apparatus may be accurately recognized and thus apparatus efficiency may be improved.

Further, as a wireless power reception apparatus is efficiently searched for, apparatus efficiency and user convenience may be improved.

Further, even when the wireless power reception apparatus is moved during charging, the wireless power reception apparatus may be automatically searched for and charged. Accordingly, apparatus efficiency and user convenience may be improved.

It will be appreciated by those skilled in the art that that the effects that can be achieved through the embodiments of the present disclosure are not limited to those described above and other effects of the present disclosure will be more clearly understood from the following detailed description.

[Description of Drawings]

The accompanying drawings, which are included to provide a further understanding of the invention and are incorporated in and constitute a part of this application, illustrate embodiments of the disclosure and together with the description serve to explain the principle of the disclosure.

FIG. 1 illustrates a wireless power transmission system according to an embodiment.
FIG. 2 is an equivalent circuit diagram of a transmission induction coil according to an embodiment.

FIG. 3 is an equivalent circuit diagram of a power source and a wireless power transmission apparatus according to an embodiment.

FIG. 4 is an equivalent circuit diagram of a wireless power reception apparatus according to an embodiment.

FIG. 5 is a perspective view illustrating a wireless power transmission system having a plurality of power transmission units according to another embodiment of the present disclosure.

FIG. 6 is a perspective view illustrating a rear surface of a terminal, which is an example of a wireless power reception apparatus.

FIG. 7 is a cross-sectional view illustrating a wireless power transmission system according to an embodiment.

FIGs. 8 to 10 are diagrams illustrating operations of a wireless power system in which wireless power transmission is performed in the resonance scheme.

FIG. 11 illustrates a control method for a wireless power transmission apparatus for transmitting wireless power to a wireless power reception apparatus according to an embodiment.

FIG. 12 is a flowchart illustrating a control method for a wireless power transmission apparatus when a wireless power reception apparatus according to an embodiment is moved while receiving wireless power.

FIG. 13 is a diagram illustrating charging of a wireless power reception apparatus according to an embodiment.

FIG. 14 is a diagram illustrating the wireless power reception apparatus that is moved while being charged according to an embodiment.

FIG. 15 is a flowchart illustrating the operation of a wireless power system when the wireless power reception apparatus is moved while being charged in the resonance scheme according to an embodiment.

FIGs. 16 and 17 are diagrams illustrating a wireless power transmission system for seamlessly transmitting wireless power to a wireless power reception apparatus that is being moved.

FIG. 18 is a block diagram of a wireless power transmission system according to an embodiment.

FIG. 19 is a detailed block diagram of the wireless power transmission system of FIG. 18.

[Best Mode]

According to an embodiment of the present disclosure, a method for controlling a wireless power transmission apparatus including a plurality of wireless power transmission units includes transmitting wireless power to a wireless power reception apparatus through a first wireless power transmission unit, sensing an induced current induced in a second wireless power transmission unit when the wireless power reception apparatus is moved toward the second wireless power transmission unit, and transmitting the wireless power to the wireless power reception apparatus through the second wireless power transmission unit.

[Mode for Invention]

Hereinafter, an apparatus and various methods to which embodiments of the present disclosure are applied will be described in detail with reference to the drawings. As used herein, the suffixes "module" and "unit" are added or used interchangeably to facilitate preparation of this specification and are not intended to suggest distinct meanings or functions.

In the description of the embodiments, it is to be understood that when an element is described as being "on" or "under" another element, it can be "directly" on or under another element or can be "indirectly" formed such that one or more other intervening elements are also present between the two elements. In addition, when an element is described as being "on" or "under," the term "on" or "under" may refer to not only the upper side but also the lower side with respect to the element.

In the description of the embodiments, "transmitter," "transmission terminal," "transmission apparatus," "transmission side," "power transmission apparatus," and the like can be used interchangeably to refer to a wireless power transmission apparatus, for simplicity. In addition, "receiver," "reception terminal," "reception side," "reception apparatus," "power reception apparatus," and the like can be used interchangeably to refer to a wireless power reception apparatus, for simplicity.

A wireless power transmission apparatus according to an embodiment of the present disclosure may include a plurality of wireless power transmission means to wirelessly transmit power to a plurality of receivers.

A wireless power transmission apparatus according to an embodiment of the present disclosure may be applied to a mobile phone, a smartphone, a laptop computer, a digital broadcast terminal, a PDA (Personal Digital Assistant), a PMP (Portable Multimedia Player), a navigation system, an MP3 player, and other small electronic devices. However, embodiments are not limited thereto.

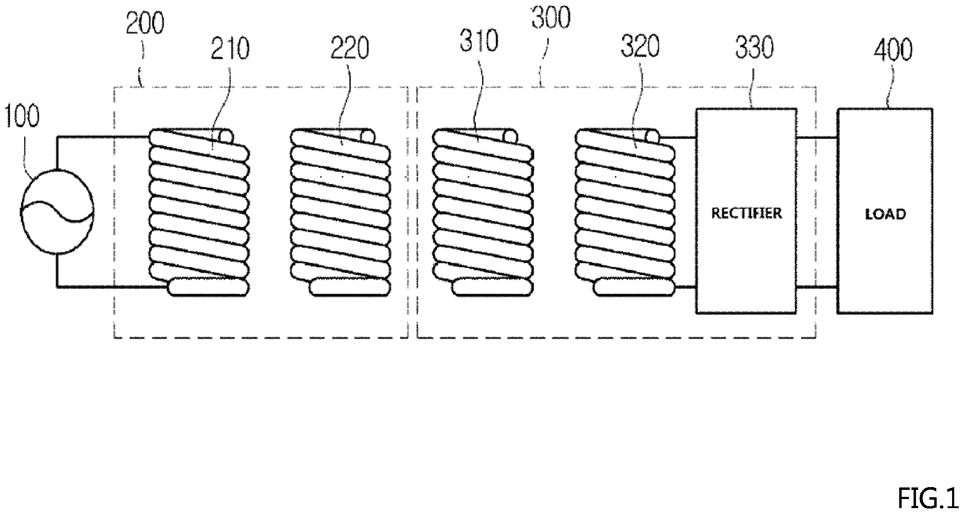

FIG. 1 illustrates an example of a wireless power transmission system.

Referring to FIG. 1, the wireless power transmission system may include a power source 100, a wireless power transmission apparatus 200, a wireless power reception apparatus 300, and a load 400.

The power source 100 may be included in the wireless power transmission apparatus 200, but embodiments are not limited thereto.

The wireless power transmission apparatus 200 may include a transmission induction coil 210 and a transmission resonance coil 220.

The wireless power reception apparatus 300 may include a reception resonance coil 310, a reception induction coil 320, and a rectifier 330.

Both ends of the power source 100 may be connected to both ends of the transmission induction coil 210.

The transmission resonance coil 220 may be disposed at a certain distance from the transmission induction coil 210.

The reception resonance coil 310 may be disposed at a certain distance from the reception induction coil 320.

Both ends of the reception induction coil 320 may be connected to both ends of the rectifier 330, and the load 400 may be connected to both ends of the rectifier 330. In an embodiment, the load 400 may be included in the wireless power reception apparatus 300.

The power generated by the power source 100 may be transmitted to the wireless power transmission apparatus 200, and the power transmitted to the wireless power transmission apparatus 200 may be transmitted to the wireless power reception apparatus 300 which is resonant with the wireless power transmission apparatus 200 by a resonance effect, i.e., has the same resonant frequency as the wireless power transmission apparatus 200.

Hereinafter, a power transmission process will be described in more detail.

The power source 100 may generate alternating current (AC) power having a predetermined frequency and transfer the generated power to the wireless power transmission apparatus 200.

The transmission induction coil 210 and the transmission resonance coil 220 may be inductively coupled. That is, an AC current may be generated in the transmission induction coil 210 by the AC power supplied from the power source 100, and an AC current may also be induced in the transmission resonance coil 220 separated from the transmission induction coil 210 by electromagnetic induction.

Thereafter, the power transmitted to the transmission resonance coil 220 may be transmitted to the wireless power reception apparatus 300 having the same resonance frequency by resonance using frequency resonance with the wireless power transmission apparatus 200.

Power may be transmitted, by resonance, between two LC circuits whose impedances are matched. Such power transmission by resonance enables power transmission with higher transmission efficiency over a longer distance than power transmission by electromagnetic induction.

The reception resonance coil 310 may receive the power transmitted from the transmission resonance coil 220 using frequency resonance. An AC current may flow in the reception resonance coil 310 due to the received power and the power transmitted to the reception resonance coil 310 may be transmitted to the reception induction coil 320, which is inductively coupled to the reception resonance coil 310, by electromagnetic induction. The power transmitted to the reception induction coil 320 may be rectified through the rectifier 330 and transmitted to the load 400.

In an embodiment, the transmission induction coil 210, the transmission resonance coil 220, the reception resonance coil 310, and the reception induction coil 320 may have one of a spiral structure and a helical structure. However, embodiments are not limited thereto.

The transmission resonance coil 220 and the reception resonance coil 310 may be resonantly coupled so as to transmit power at a resonance frequency.

Power transmission efficiency between the wireless power transmission apparatus 200 and the wireless power reception apparatus 300 may be greatly improved due to resonance coupling between the transmission resonance coil 220 and the reception resonance coil 310.

The above-described wireless power transmission system transmits power using the resonance frequency scheme.

While the wireless power transmission apparatus 200 is illustrated in the embodiment as having one transmission induction coil 210 and one transmission resonance coil 220, embodiments are not limited thereto. The wireless power transmission apparatus 200 may include a plurality of transmission induction coils 210 and a plurality of transmission resonance coils 220. A detailed example will be given later.

Embodiments of the present disclosure may be applied not only to power transmission using the resonance frequency scheme, but also to power transmission using the electromagnetic induction scheme.

That is, in an embodiment, if the wireless power transmission system performs power transmission based on electromagnetic induction, the transmission resonance coil 220 included in the wireless power transmission apparatus 200 and the reception resonance coil 310 included in the wireless power reception apparatus 300 may be omitted.

In wireless power transmission, quality factor and coupling coefficient may have important meanings. That is, power transmission efficiency may be proportional to each of the quality factor and the coupling coefficient. Therefore, as the value of at least one of the quality factor and the coupling coefficient increases, power transmission efficiency may be improved.

The quality factor may mean an index of energy that may be accumulated in the vicinity of the wireless power transmission apparatus 200 or the wireless power reception apparatus 300.

The quality factor may vary depending on the operating frequency (w), shape, dimensions, material, etc. of a coil. The quality factor may be given by Equation 1 below.

Equation 1

$$Q = w * L / R$$

Here, L denotes inductance of the coil, and R denotes resistance corresponding to the amount of power loss occurring in the coil itself.

The quality factor may have a value from 0 to infinity. The quality factor is proportional to the power transmission efficiency between the wireless power transmission apparatus 200 and the wireless power reception apparatus 300.

The coupling coefficient means the degree of magnetic coupling between the transmission side coil and the reception side coil, and ranges from 0 to 1.

The coupling coefficient may vary depending on the relative positions or distance between the transmission side coil and the reception side coil.

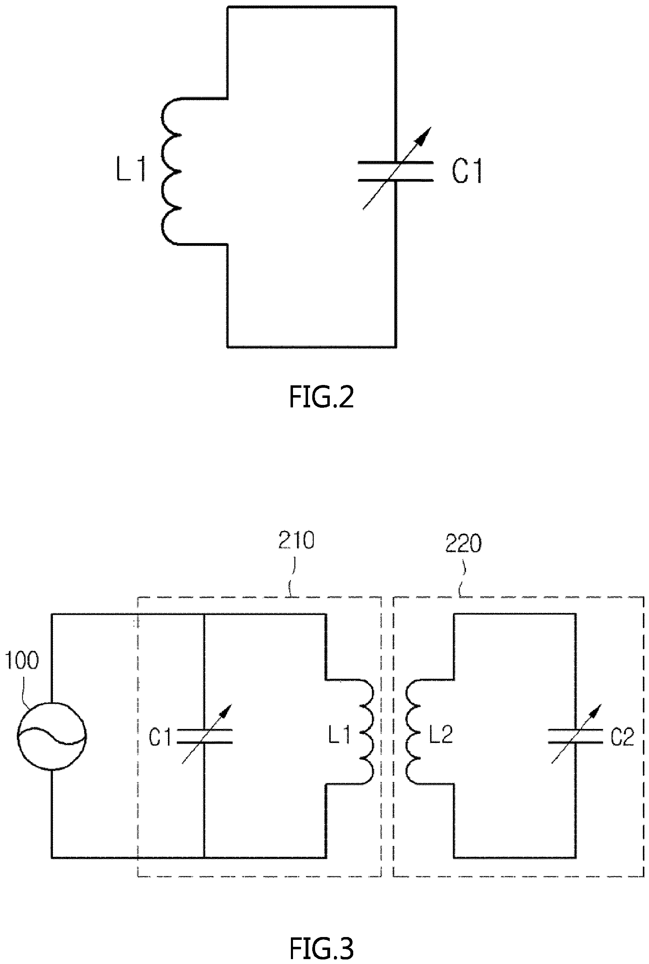

FIG. 2 is an equivalent circuit diagram of a transmission induction coil.

As shown in FIG. 2, the transmission induction coil 210 may include an inductor L1 and a capacitor C1, and a circuit having a proper inductance and capacitance may be configured by the inductor L1 and the capacitor C1.

The transmission induction coil 210 may include an equivalent circuit in which both ends of the inductor L1 are connected to both ends of the capacitor C1. That is, the transmission induction coil 210 may include an equivalent circuit in which the inductor L1 and the capacitor C1 are connected in parallel.

The capacitor C1 may be a variable capacitor, and impedance matching may be performed as the capacitance of the capacitor C1 is adjusted. The equivalent circuits of the transmission resonance coil 220, the reception resonance coil 310, and the reception induction coil 320 may be the same as or similar to the circuit shown in FIG. 2, but embodiments are not limited thereto.

FIG. 3 is an equivalent circuit diagram of a power source and a wireless power transmission apparatus according to an embodiment.

As shown in FIG. 3, each of the transmission induction coil 210 and the transmission resonance coil 220 may include an inductor L1, L2 and a capacitor C1, C2 that have predetermined inductance and capacitance.

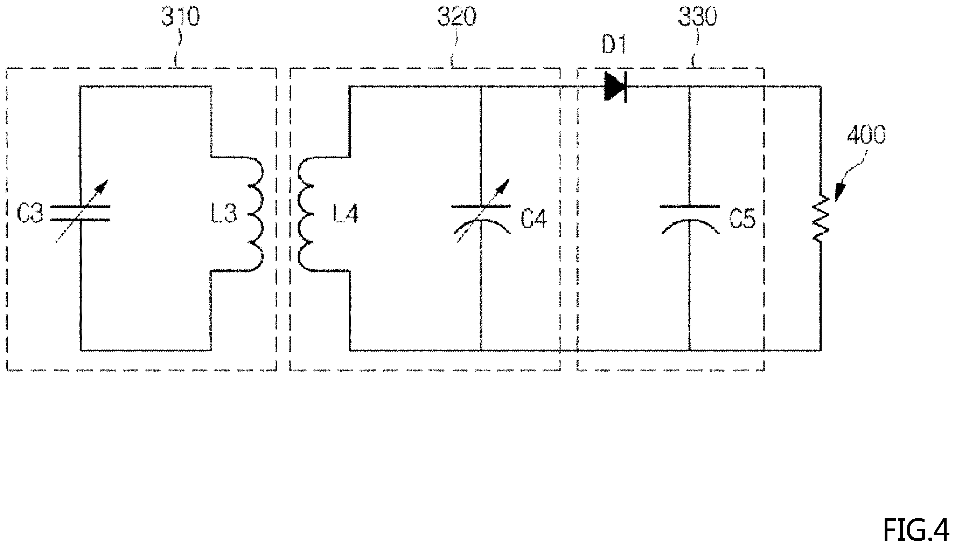

FIG. 4 is an equivalent circuit diagram of a wireless power reception apparatus according to an embodiment.

As shown in FIG. 4, each of the reception resonance coil 310 and the reception induction coil 320 may include an inductor L3, L4 and a capacitor C3, C4 that have predetermined inductance and capacitance.

The rectifier 330 may convert the AC power received from the reception induction coil 320 into direct current (DC) power and transmit the converted DC power to the load 400.

Specifically, the rectifier 330 may include a rectifier and a smoothing circuit, which are not shown. In an embodiment, the rectifier may be a silicon rectifier, and may be equivalent to a diode D1, as shown in FIG. 4, but is not limited thereto.

The rectifier may convert the AC power received from the reception induction coil 320 into DC power.

The smoothing circuit may output smooth DC power by removing an AC component included in the DC power converted by the rectifier. In an embodiment, the smoothing circuit may be, without being limited to, a rectifying capacitor C5 as shown in FIG. 4.

The DC power transmitted from the rectifier 330 may be a DC voltage or a DC current, but is not limited thereto.

The load 400 may be any rechargeable battery or device requiring DC power. For example, the load 400 may be a battery.

The wireless power reception apparatus 300 may be installed in an electronic device requiring power such as a mobile phone, a notebook computer, and a mouse. Accordingly, the reception resonance coil 310 and the reception induction coil 320 may have shapes conforming to the shape of the electronic device.

The wireless power transmission apparatus 200 may exchange information with the wireless power reception apparatus 300 using in-band or out-of-band communication.

In-band communication may refer to communication through which information is exchanged between the wireless power transmission apparatus 200 and the wireless power reception apparatus 300 using a signal having a frequency used for wireless power transmission. To this end, the wireless power reception apparatus 300 may further include a switch and may or may not receive power transmitted from the wireless power transmission apparatus 200 through the switching operation of the switch. Accordingly, the wireless power transmission apparatus 200 may detect the energy consumed by the wireless power transmission apparatus 200 and recognize the ON or OFF signal of the switch included in the wireless power reception apparatus 300.

Specifically, the wireless power reception apparatus 300 may change the energy to be consumed by the wireless power transmission apparatus 200 by changing the energy absorbed by a resistor using the resistor and the switch. The wireless power transmission apparatus 200 may sense change in the consumed power and acquire the state information on the load 400. The switch and the resistor may be connected in series. In an embodiment, the state information on the load 400 may include information on the current charging level and the charging level variation of the load 400. The load 400 may be included in the wireless power reception apparatus 300.

More specifically, when the switch is opened, the power absorbed by the resistor becomes 0, and the power consumed by the wireless power transmission apparatus 200 decreases.

When the switch is closed, the power absorbed by the resistor becomes larger than 0, and the power consumed by the wireless power transmission apparatus 200 increases. When the wireless power reception apparatus 200 repeats this operation, the wireless power transmission apparatus 200 may detect the power consumed by the wireless power transmission apparatus 200 and perform digital communication with the wireless power reception apparatus 300.

The wireless power transmission apparatus 200 may receive the state information on the load 400 according to the operation described above and transmit power proper therefor.

Alternatively, it is possible to provide a resistor and a switch to the wireless power transmission apparatus 200 to transmit the state information on the wireless power transmission apparatus 200 to the wireless power reception apparatus 300. In an embodiment, the state information on the wireless power transmission apparatus 200 may include information on the maximum power that the wireless power transmission apparatus 200 is capable of transmitting, the number of the wireless power reception apparatuses 300 to which the wireless power transmission apparatus 200 is providing power, and an available power of the wireless power transmission apparatus 200.

Next, out-of-band communication will be described below.

Out-of-band communication refers to communication in which information necessary for power transmission is exchanged using a separate frequency band other than the resonance frequency band. An out-of-band communication module may be installed in each of the wireless power transmission apparatus 200 and the wireless power reception apparatus 300 and thus information necessary for power transmission may be exchanged between the devices. The out-of-band communication module may be installed in the power source 100, but embodiments are not limited thereto. In an embodiment, the out-of-band communication module may use a short-range communication scheme such as Bluetooth, Zigbee, Wireless LAN, or Near Field Communication (NFC), but embodiments are not limited thereto.

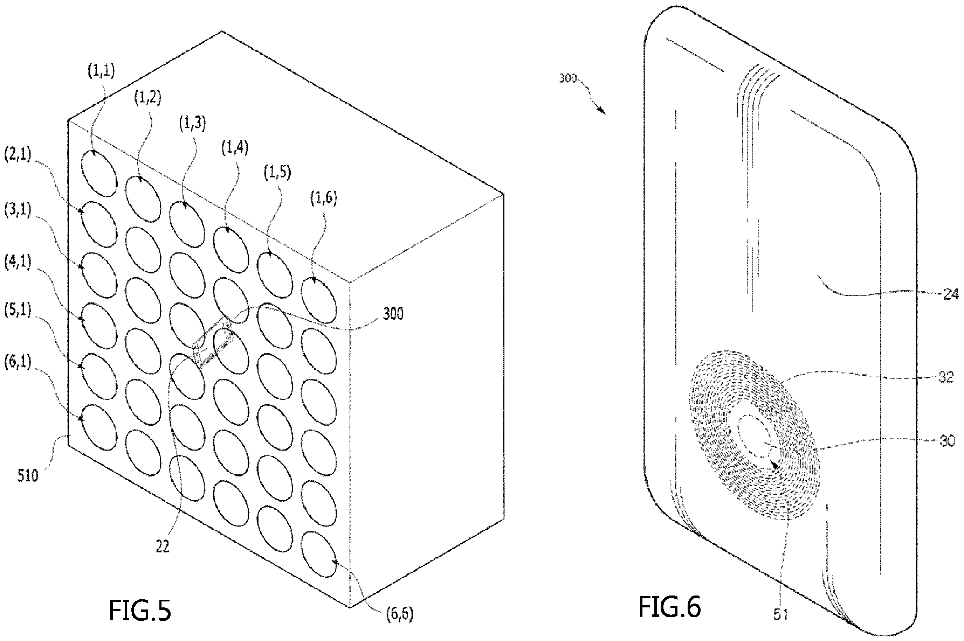

FIG. 5 is a perspective view illustrating a wireless power transmission system having a plurality of power transmission units according to another embodiment of the present disclosure.

Referring to FIG. 5, a wireless power transmission apparatus 200 may include a charging pad 510. Here, the charging pad 510 may include a plurality of power transmission units (1, 1), (1, 2),..., (6, 6). Although the plurality of power transmission units is described as being arranged in six rows and six columns, a plurality of transmission units may be arranged in a line, and two or more reception units may be arranged, but the present disclosure is not limited thereto.

The charging pad 510 may include the power source and the wireless power transmission unit (e.g., a transmission device) shown in FIG. 1. That is, a power source and a plurality of wireless power transmission units (e.g., transmission devices) may be embedded in the charging pad 510. When seen from above, the charging pad 510 may have a circular, oval, square, or rectangular shape, but embodiments are not limited thereto.

The upper surface of the charging pad 510 may be in surface contact with one surface of the wireless power reception apparatus 300. The shape of at least a part of the upper surface of the charging pad 510 may be the same as the shape of the back surface of the wireless power reception apparatus 300, but embodiments are not limited thereto.

Hereinafter, a terminal 300 will be described as an example of the wireless power reception apparatus 300.

Each of the wireless power transmission units (1, 1), (1, 2),..., and (6, 6) embedded in the charging pad 510 may include the transmission coil 210, 220 shown in FIG. 1. Each of the wireless power transmission units (1, 1), (1, 2),..., (6, 6) may include one transmission coil or a plurality of transmission coils (not shown), but embodiments are not limited thereto.

A transmission coil (not shown) provided to each of the wireless power transmission units (1, 1), (1, 2),..., and (6, 6) may be disposed to face the upper surface of the charging pad 510. The transmission coil (not shown) may be disposed in parallel with the upper surface of the charging pad 510 such that the power of the transmission coil (not shown) is uniformly transmitted to the terminal 300.

Each of the plurality of power transmission units (1, 1), (1, 2),..., and (6, 6) may receive power from the power source 100 described above. Particularly, a plurality of power sources 100 may be provided so as to match each of the power transmission units (1, 1), (1, 2),..., and (6, 6).

The wireless power transmission apparatus 200 may simultaneously transmit wireless power to a plurality of devices such as the illustrated wireless power reception apparatus 300.

The wireless power reception apparatus 300 may include a part of the equivalent circuit shown in FIG. 4. For example, it may include a transmission induction coil 320, a rectifier 330, and a load 400. The wireless power reception apparatus 300 may include various types of devices. The wireless power reception apparatus 300 may be applied to a mobile phone, a smartphone, a laptop computer, a digital broadcast terminal, a PDA (Personal Digital Assistant), a PMP (Portable Multimedia Player), a navigation system, an MP3 player, and other small electronic devices, but is not limited thereto.

The wireless power reception apparatus 300 may include a battery (not shown) for charging and may refer to any electronic devices capable of performing a predetermined electronic function using power stored in the battery (not shown). For example, the wireless power reception apparatus 300 may include a mobile device such as a smartphone or a tablet, or a home appliance such as a television, a refrigerator, or a washing machine.

The wireless power reception apparatus 300 may include the wireless power reception coil and the load shown in FIG. 1. That is, the wireless power reception coil and the load may be embedded in the wireless power reception apparatus 300.

The wireless power reception apparatus 300 may be placed on the upper surface of the charging pad 510 for charging. When the wireless power reception apparatus 300 is placed on the upper surface of the charging pad, the front cover 22 of the wireless power reception apparatus 300 may face upward and the rear cover 24 of the wireless power reception apparatus 300 may contact the upper surface of the charging pad 510. Thus, power may be wirelessly supplied from the charging pad 510 and the load may be charged with the power.

Hereinafter, a terminal 300 will be described as an example of the wireless power reception apparatus 300, as shown in FIG. 6.

A reception coil 32 and a magnet 30 may be disposed adjacent to the back surface of the wireless power reception apparatus 300. The reception coil 32 may also be disposed to face at least one transmission coil disposed in the charging pad 510, the upper surface of the charging pad 510, and the rear cover 24 of the wireless power reception apparatus 300. Particularly, positioning the reception coil 32 of the wireless power reception apparatus 300 so as to be parallel to at least one transmission coil disposed in the charging pad 510 may maximize transmission efficiency of power transmitted from the transmission coil of the charging pad 510 to the reception coil 32 of the wireless power reception apparatus 300.

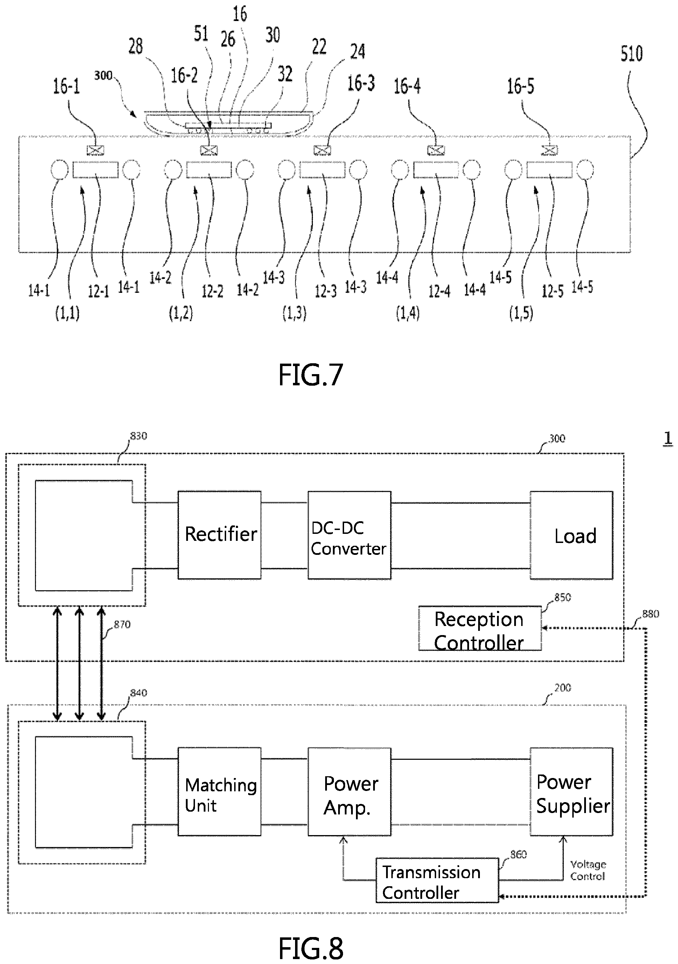

The structure of the wireless power transmission system according to an embodiment will be described in more detail with reference to FIG. 7.

FIG. 7 is a cross-sectional view illustrating a wireless power transmission system according to an embodiment.

The charging pad 510 may include, for example, a plurality of power transmission units (1, 1) to (1, 5), specifically, two or more power transmission units. Here, a terminal 300 will be described as an example of the wireless power reception apparatus 300.

Each of the plurality of power transmission units (1, 1) to (1, 5) may include a transmission coil 14-1 to 14-5 and a plurality of first magnets 12-1 to 12-5. The plurality of transmission coils 14-1 to 14-5 and the plurality of first magnets 12-1 to 12-5 may be disposed adjacent to the upper surface of the charging pad 510. The transmission coils 14-1 to 14-5 and the magnets 12-1 to 12-5 may be disposed in the same plane.

The transmission coils 14-1 to 14-5 may be the transmission induction coil and/or the transmission resonance coil shown in FIG. 1. For example, both the transmission induction coil and the transmission resonance coil are used in the case of the resonance scheme, whereas only the transmission induction coil may be used in the electromagnetic induction scheme.

Each of the plurality of transmission coils 14-1 to 14-5 may be disposed to surround each of the plurality of first magnets 12-1 to 12-5. For example, the first transmission coil 14-1 may surround the first magnet 12-1, the second transmission coil 14-2 may surround the second magnet 12-2, the third transmission coil 14-3 may surround the third magnet 12-3, the fourth transmission coil 14-4 may surround the fourth magnet 12-4, and the fifth transmission coil 14-5 may surround the fifth magnet 12-5. However, since this figure is a sectional view, it is difficult to show this configuration in the figure.

The transmission coils 14-1 to 14-5 may have several turns and adjacent transmission coils 14-1 to 14-5 may be spaced apart from each other. However, embodiments are not limited thereto. The transmission coils 14-1 to 14-5 may be arranged parallel to a virtual horizontal plane. The center regions of the transmission coils 14-1 to 14-5 having this structure may be free spaces.

The plurality of first magnets 12-1 to 12-5 may be disposed in the center regions of the transmission coils 14-1 to 14-5. The thickness of the plurality of first magnets 12-1 to 12-5 may be greater than, equal to, or less than the thickness of the transmission coils 14-1 to 14-5. According to the strength of the magnetic flux density required for the plurality of first magnets 12-1 to 12-5 and the occupied areas of the magnets 12-1 to 12-5, the thickness of the plurality of first magnets 12-1 to 12-5 and the areas of the plurality of first magnets 12-1 to 12-5 may be varied.

The terminal 20 may include a shielding member 26, a reception coil 32, and a second magnet 30. The reception coil 32 and the second magnet 30 may be disposed in the same plane.

While the terminal 20 is illustrated as being in contact with the charging pad 510 of the wireless power transmission apparatus 200, the terminal 20 may be spaced apart from the charging pad 510 by a certain distance.

The terminal 20 may be larger or smaller than each of the plurality of power transmission units (1, 1) to (1, 5), but embodiments are not limited thereto.

The reception coil 32 may be the reception resonance coil and/or the reception induction coil shown in FIG. 1. For example, both the reception resonance coil and the reception induction coil may be used in the resonance scheme, whereas only the reception induction coil may be used in the electromagnetic induction scheme.

The reception coil 32 may be disposed to surround the second magnet 30. The reception coils 32 may have several turns and adjacent reception coils 32 may be spaced apart from each other. The reception coil 32 may be arranged so as to be parallel to a virtual horizontal plane. The center region of the reception coil 32 having such a structure may be a free space.

The second magnet 30 may be disposed in the center region of the reception coil 32. The center region of the reception coil 32 may be smaller than the center region of the transmission coils 14-1 to 14-5, but embodiments are not limited thereto. The thickness of the second magnet 30 may be greater than, equal to, or less than the thickness of the reception coil 32. The thickness of the second magnet 30 and the area of the second magnet 30 may vary depending on the strength of the magnetic flux density required for the second magnet 30 and the occupied area of the second magnet 30.

The second magnet 30 allows the charging pad 510 to sense proximity or contact of the terminal 300.

To allow this sensing operation, the charging pad 510 may further include Hall sensors 16-1 to 16-5. The Hall sensors 16-1 to 16-5 may be disposed between the upper surface of the charging pad 510 and the first magnets 12-1 to 12-5, but embodiments are not limited thereto. The Hall sensors 16-1 to 16-5 may be disposed closer to the upper surface of the charging pad 510 than the first magnets 12-1 to 12-5. The Hall sensors 16-1 to 16-5 may be disposed in the charging pad 510 between the first magnets 12-1 to 12-5 of the charging pad 510 and the second magnet 30 of the wireless power reception apparatus 300. When the wireless power reception apparatus 300 is not present, the Hall sensors 16-1 to 16-5 sense only the strength of the magnetic flux density of the first magnets 12-1 to 12-5. However, when the wireless power reception apparatus 300 is brought close to the charging pad 510, the Hall sensors 16-1 to 16-5 may sense not only the strength of the magnetic flux density of the first magnets 12-1 to 12-5, but also the strength of the magnetic flux density of the second magnet 30. The charging pad 510 may sense the strength of the magnetic flux density of the first magnets 12-1 to 12-5 and the strength of the magnetic flux density of the second magnet 30 sensed when the wireless power reception apparatus 300 is placed on the charging pad 510, based on the strength of the magnetic flux density of the first magnets 12-1 to 12-5 sensed when the wireless power reception apparatus 300 is not present. If the amount of change $\alpha$ in the magnetic flux density is greater than or equal to a threshold value, it may be determined that the wireless power reception apparatus 300 is placed on the charging pad 510 for charging, and thus charging of the wireless power reception apparatus 300 may proceed.

While the Hall sensors 16-1 to 16-5 are described as being disposed between the upper surface of the charging pad 510 and the first magnets 12-1 to 12-5 in the above example, it should be noted that the Hall sensors 16-1 to 16-5 may be disposed on one side of the lower end of the first magnets 12-1 to 12-5 or on one side of the lower end of the transmission coils 14-1 to 14-5 in another embodiment.

To this end, the second magnet 30 may be made of a material which produces an amount of change $\alpha$ in the magnetic flux density that is greater than or equal to a threshold value. For example, the threshold may be 32G. The threshold required in the standard may be 40G.

The second magnet 30 may be an electrical sheet. For example, the electrical steel sheet may contain at least 1% to 5% of silicon (Si), but embodiments are not limited thereto. The silicon content of the second magnet 30 may be varied such that the amount of change $\alpha$ in the magnetic flux density is greater than or equal to the threshold value required by the standard or a client company.

For example, the reception coil 32 and the second magnet 30 may be attached to the back surface of the shielding member 26 using an adhesive 28. A printed circuit board on which electronic components including a power source, an AC power generation unit, and a controller are mounted may be disposed on the shielding member 26.

The shielding member 26 may shield a magnetic field induced by the coils such that the magnetic field does not affect the electronic components, thereby preventing malfunction of the electronic component.

Hereinafter, a wireless power transmission system capable of performing wireless power transmission using the resonance scheme will be described.

FIGs. 8 to 10 are diagrams illustrating operations of a wireless power system in which wireless power transmission is performed using the resonance scheme.

Referring to FIG. 8, the wireless power system 1 includes a wireless power transmission apparatus 200 and a wireless power reception apparatus 300.

The wireless power transmission apparatus 200 may include a transmission (Tx) resonator 840, a matching circuit, a power amplifier, a power supply, and a transmission controller 860. The transmit controller may include a transmission microcontroller and an out-of-band signaling unit.

The Tx resonator 840 may transmit a signal to a reception (Rx) resonator 830, which will be described later, using the same resonance frequency (for example, 6.78 MHz).

The transmission controller 860 may transmit and receive signals other than the wireless power signal to and from the reception controller 850 on a channel 880. For example, communication may be performed through Bluetooth.

The wireless power reception apparatus 300 may include the Rx resonator 830, a rectifier, a DC/DC converter, a load, and the reception controller 850. For example, the reception controller 850 may include a reception microcontroller and an out-of-band signaling unit.

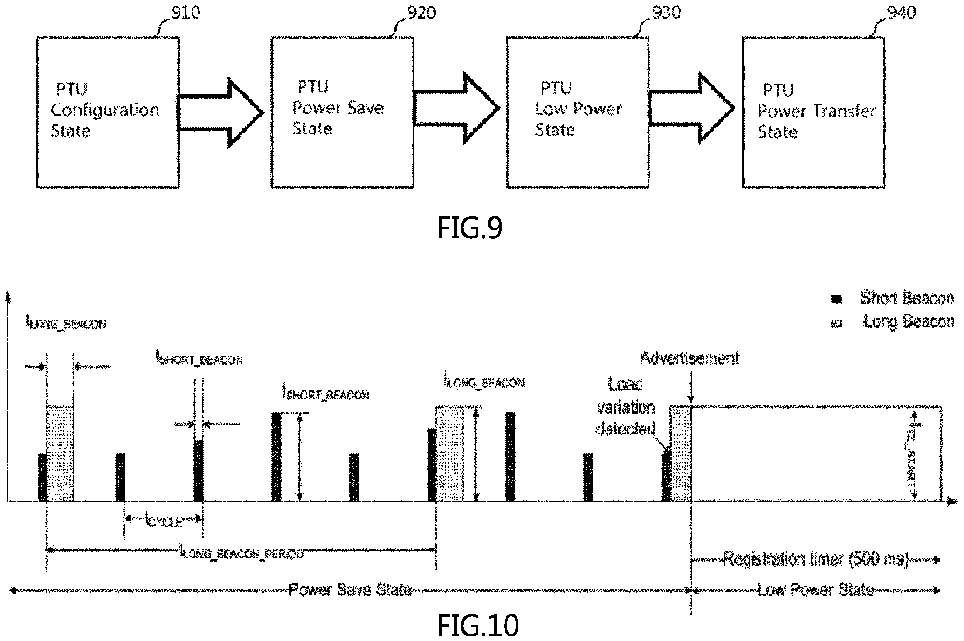

FIG. 9 is a diagram illustrating a state for transmitting wireless power from the wireless power transmission apparatus 200. According to FIG. 9, the wireless power transmission apparatus 200 may transmit wireless power to the wireless power reception apparatus 300 via a configuration state 910, a power save state 920, a low power state 930 and a power transfer state 940.

In the configuration state 910, the wireless power transmission apparatus 200 performs apparatus initialization for wireless power transmission. When wireless power transmission initialization is completed, or a transmission reset timer is reset, the wireless power transmission apparatus 200 switches to the power save state 920.

In the power save state 920, the wireless power transmission apparatus 200 may detect change in impedance of the transmission resonator 840 by periodically applying a current to the transmission resonator 840. In addition, the wireless power transmission apparatus 200 periodically transmits a current to the transmission resonator 840 to enable communication with the wireless power reception apparatus 300.

The wireless power transmission apparatus 200 may detect change in impedance of the transmission resonator 840 using a short beacon. The wireless power transmission apparatus 300 may be periodically transmit a long beacon to the wireless power reception apparatus 300 to ensure that sufficient power for booting and response of the wireless power reception apparatus 300 is transmitted. FIG. 10 depicts points in time at which the short beacon and the long beacon are transmitted. In FIG. 10, the X-axis represents time, and the Y-axis represents current.

Referring to FIG. 10, the transmission cycle tCYCLE of the short beacon may be between $250 \pm 5$ ms. In addition, the current of the short beacon must be larger than the minimum amount of current ITX_SHORT_BEACON_MIN for detecting the wireless power reception apparatus 300. The detectable current amount may vary depending on the type of the wireless power reception apparatus (the type is classified into categories and is distinguished by the maximum power delivered to the load).

The cycle of the long beacon may start within 10 ms at the end of the short beacon transmission and may be between $105 \pm 5$ ms. The current of the long beacon must be larger than the minimum amount of current ITX_LONG_BEACON_MIN required to wake up the reception controller 850 to initiate communication with the wireless power reception apparatus 300 during the cycle of the long beacon. Hereinafter, a detailed description will be given of a method for recognizing and controlling the wireless power reception apparatus by the wireless power transmission apparatus.

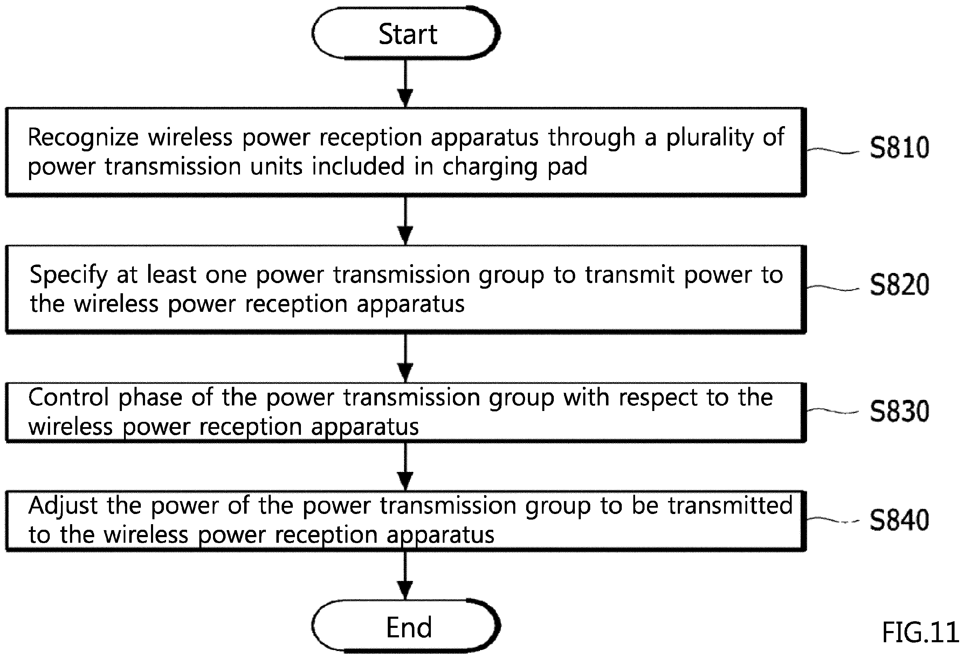

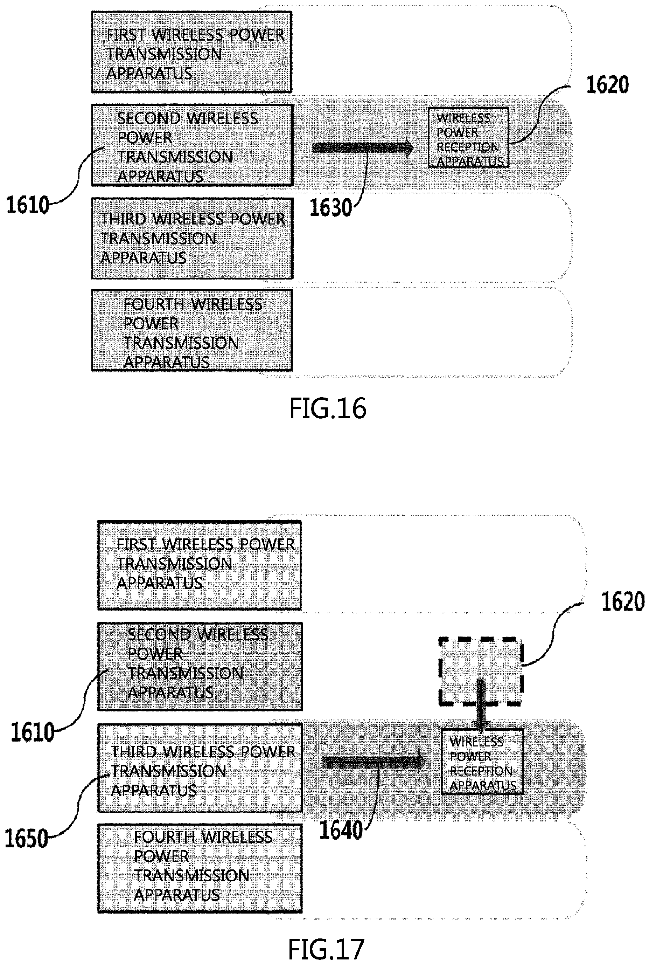

FIG. 11 illustrates a control method for a wireless power transmission apparatus for transmitting wireless power to a wireless power reception apparatus according to an embodiment. Reference numerals from FIG. 5 (e.g., a plurality of power transmission units), FIG. 7 (e.g., a Hall sensor) and FIG. 16 (e.g., a controller), which will be described later, will be further referred to.

First, the controller 17 of the wireless power transmission apparatus 200 recognizes the wireless power reception apparatus 300 through a plurality of power transmission units (1, 1) to (6, 6) (S810).

Each of the plurality of power transmission units (1, 1) to (6, 6) may include a Hall sensor 16-1 to 16-n, and the controller 17 may recognize the wireless power reception apparatus 300 through change in the magnetic fields of the respective Hall sensors 16-1 to 16-n.

Specifically, the Hall sensors 16-1 to 16-n may measure the magnetic flux densities of the transmission coils included in the plurality of power transmission units (1, 1) to (6, 6) corresponding to the Hall sensors 16-1 to 16-n under control of the controller 17.

At this time, if a magnet or a metal member included in the wireless power reception apparatus 300 approaches the Hall sensors 16-1 to 16-n, the Hall sensors 16-1 to 16-n measure the change in magnetic flux density using the magnetic flux density given when the wireless power reception apparatus 300 does not approach the sensors and the magnetic flux density given when the wireless power reception apparatus 300 approaches sensors.

While the Hall sensors 16-1 to 16-n are described as being included in each of the plurality of power transmission units (1, 1) to (6, 6), they may be disposed in a certain region of the charging pad 510 irrespective of the plurality of power transmission units (1, 1) to (6, 6).

The controller 17 may control the plurality of power transmission units (1, 1) to (6, 6) to drive the Hall sensors 16-1 to 16-n from the outermost periphery to the center, thereby recognizing the wireless power reception apparatus 300.

Even if neither the Hall sensor nor the magnet (metal member) is provided, the controller 17 may detect change in input impedance of the plurality of power transmission units (1, 1) to (6, 6) and thus recognize the wireless power reception apparatus 300 if change in input impedance is greater than or equal to a threshold value.

Specifically, for example, in the case of the induction scheme (e.g., PMA (Power Matrix Alliance)), the controller 17 may transmit a ping. In the case of the resonance scheme (e.g., A4WP (Alliance For Wireless Power)), the controller 17 may transmit a beacon signal.

In the case of the induction scheme, the wireless power reception apparatus 300 may transmit a feedback signal to the plurality of power transmission units (1, 1) to (6, 6) in an in-band manner. In the case of the resonance scheme, the wireless power reception apparatus 300 may transmit a feedback signal to the plurality of power transmission units (1, 1) to (6, 6) in an out-of-band manner.

Then, the controller 17 may detect the change in input impedance of the plurality of power transmission units (1, 1) to (6, 6) greater than or equal to a threshold value through a sensor (e.g., an impedance change sensor). The controller 17 may also recognize the wireless power reception apparatus 300 using a pressure sensor, an optical sensor, and the like.

After step S810, the controller 17 specifies a power transmission group including at least one power transmission unit to transmit power to the wireless power reception apparatus 300 (S820).

If change in the magnetic field (or input impedance) between each of the at least one power transmission unit and the wireless power reception apparatus 300 exceeds a preset threshold value, the controller 17 may specify at least one power transmission unit exceeding the threshold value as a power transmission group 1010.

That is, the controller 17 may specify the power transmission group 1010 capable of transmitting power most efficiently among the plurality of power transmission units (1, 1) to (6, 6).

Meanwhile, the controller 17 may scan the shape of the wireless power reception apparatus 300 using a power transmission unit that recognizes the wireless power reception apparatus 300 among the plurality of power transmission units (1, 1) to (6, 6), and specify at least one power transmission group to transmit power to the wireless power reception apparatus.

The power transmission group 1010 may be a power transmission unit that transmits power to the wireless power reception apparatus 300.

The power transmission group may include a power transmission unit having a Hall sensor having recognized the wireless power reception apparatus 300.

The controller 17 may perform precise scanning of the wireless power reception apparatus 300 through the power transmission unit having recognized the wireless power reception apparatus 300.

After step S820, the controller 17 controls the phase of the power transmission group with respect the wireless power reception apparatus (S830).

The controller 17 may select a first power transmission unit having superior coil alignment with the reception device 300 in the specified power transmission group. Here, the power transmission unit having excellent alignment refers to a power transmission unit having the largest magnetic field formed with the wireless power reception apparatus, such that charging of the battery provided in the wireless power reception apparatus with power is excellent.

Additionally, the controller 17 may control the phase of the power transmission group with respect to the reception device based on the first power transmission unit.

After step S830, the controller 17 adjusts the power of the power transmission group to be transmitted to the wireless power reception apparatus (S840).

Since the power received by the wireless power reception apparatus 300 is limited, the controller 17 may adjust the power of the power transmission group, considering the distance to the receiver and efficiency.

For example, the controller 17 may supply power to the power transmission unit having the best alignment with the wireless power reception apparatus 300 first, and may then supply power to the surrounding power transmission units.

In addition, the controller 17 may cut off the power of a power transmission unit having the poorest alignment with the wireless power reception apparatus 300, and transmit power to the power transmission units from the power transmission units disposed outside the power transmission group to the power transmission unit disposed at the center of the power transmission group.

Operation of the wireless power transmission system when the wireless power receiving device is moved while being charged

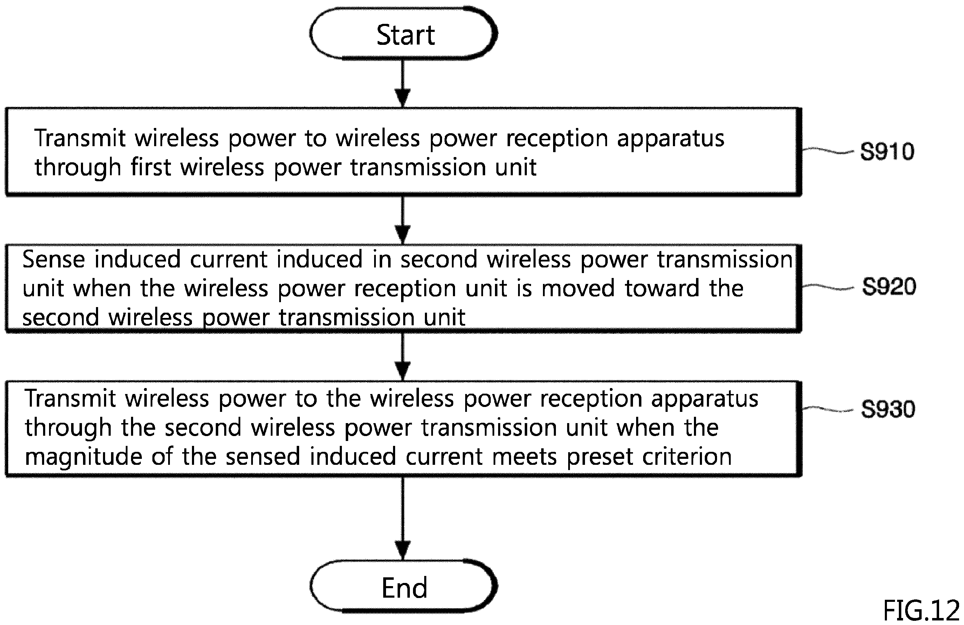

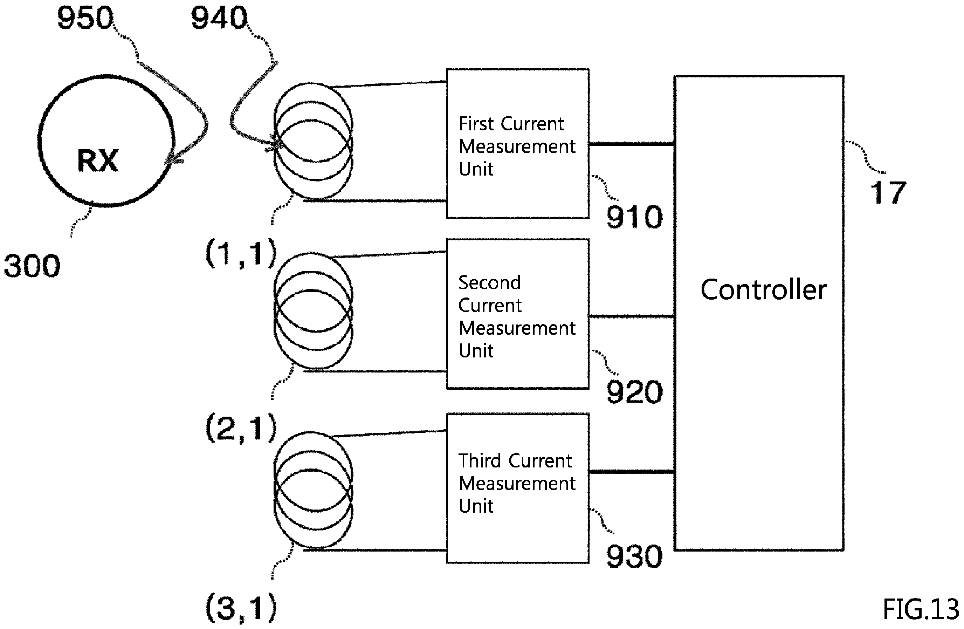

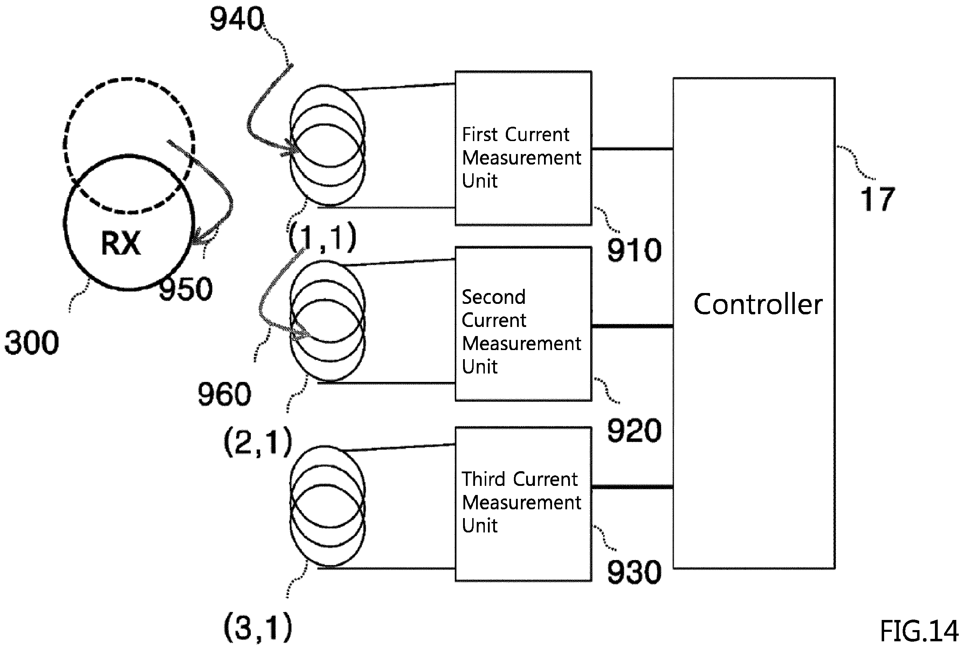

FIG. 12 is a flowchart illustrating a control method for a wireless power transmission apparatus when a wireless power reception apparatus according to an embodiment is moved while receiving wireless power. A description will be given with reference to FIGs. 13 and 14. FIG. 17 will also be referred to in the description.

FIG. 13 is a diagram illustrating charging of a wireless power reception apparatus according to an embodiment, and FIG. 14 is a diagram illustrating the wireless power reception apparatus that is moved while being charged according to an embodiment.

Referring to FIG. 12, the controller 17 of the wireless power transmission apparatus 200 transmits wireless power to the wireless power reception apparatus through the first wireless power transmission unit (1, 1) (S910). This operation corresponds to the embodiment shown in FIG. 13.

The controller 17 may control the power source (not shown) to apply an alternating current to the first wireless power transmission unit (1, 1). Accordingly, the first wireless power transmission unit (1, 1) may generate an alternating current by the AC power supplied from the power source (not shown), and electromagnetic induction by the alternating current may cause an alternating current to be induced in the coil (not shown) of the wireless power reception apparatus 200 physically spaced apart from the first wireless power transmission unit.

Referring to FIG. 13, the first wireless power transmission unit (1, 1) includes a coil and a first current measurement unit 910, the second wireless power transmission unit (2, 1) includes a coil and a second current measurement unit 920, and the third wireless power transmission unit (3, 1) includes a coil and a third current measurement unit 930. The coils of the first to third wireless power transmission units (1, 1) to (3, 1) are connected one to one with the first to third current measurement units 910 to 930, respectively.

The first current measurement unit 910 may measure the current applied to the first wireless power transmission unit (1, 1), the second current measurement unit 920 may measure the current applied to the second wireless power transmission unit (2, 1), and the third current measurement unit 930 may measure the current applied to the third wireless power transmitter (3, 1).

When a current is applied to the first wireless power transmission unit (1, 1) in a first direction 940, a current is induced in the wireless power reception apparatus 300 in a second detection 950.

Next, a case where the wireless power reception apparatus 300 is moved toward the second wireless power transmitting unit (2, 1) will be described. This case corresponds to the embodiment shown in FIG. 14.

After step S810, when the wireless power reception apparatus 300 is moved toward the second wireless power transmission unit (2, 1) during wireless power transmission, the controller 17 senses an induced current that is induced in the second wireless power transmission unit (2, 1) (S920).

Referring to FIG. 14, when the wireless power reception apparatus 300 is moved toward the second wireless power transmission unit (2, 1), the current induced in the wireless power reception apparatus 300 in the second direction 950 causes current to be induced in the second wireless power transmission unit (2, 1) in the third direction 960.

The second current measurement unit 920 may measure a change in the current applied to the second wireless power transmission unit (2, 1) and transmit the measured value of current to the controller 17.

Then (after step S920), if the sensed magnitude of the induced current satisfies a preset reference, the controller 17 transmits wireless power to the wireless power reception apparatus 300 through the second wireless power transmission unit (2, 1) (S930). Details will be described below.

First, the controller 17 may measure the induced current of the second wireless power transmission unit (2, 1) through the second current measurement unit 920. It is assumed that the controller 17 can accurately measure the amount of change in the current according to movement of the wireless power reception apparatus 300. Specifically, when the wireless power reception apparatus 300 is charged without being moved (for example, when the wireless power reception apparatus 300 is charged through the first wireless power transmission unit (1, 1)), the controller 17 may monitor the values of current (or the value of change in impedance) sensed by surrounding wireless power transmission units (e.g., the wireless power transmission unit (2, 1) and the second wireless power transmission unit (3, 1)). In this case, the controller 17 may recognize the difference between the value of current given when the wireless power reception apparatus 300 is charged without being moved and the value of current (or the value of change in impedance) given when the wireless power reception apparatus 300 is moved. If the distance that the wireless power reception apparatus is moved is proportional to the value of current (or the value of change in impedance).

The controller 17 may determine which of the wireless efficiency of transmission through the first wireless power transmission unit (1, 1) and the wireless efficiency of transmission through the second wireless power transmission unit (2, 1) is higher. For example, the controller 17 may change the wireless power transmission unit in consideration of not only the amount of current of the first wireless power transmission unit (1, 1) and the second wireless power transmission unit (2, 1) but also the wireless power transmission efficiency.

In addition, the controller 17 may control wireless power transmission to be performed seamlessly by switching from the first wireless power transmission unit (1, 1) to the second wireless power transmission unit (2, 1). The controller 17 may be constituted by one microprocessor, and thus may not repeat ping transmission, identification and configuration steps even if the wireless power transmission unit is changed from the first wireless power transmission unit (1, 1) to the second wireless power transmission unit (2, 1). This is because the controller 17 has already performed wireless power transmission with the wireless power reception unit 300.

According to the present disclosure, since the wireless power transmission unit is seamlessly changed from the first wireless power transmission unit (1, 1) to the second wireless power transmission unit (2, 1), interruption and restart of charging may be seamlessly performed, and thus improvement in sensitivity of the apparatus is expected. Accordingly, user inconvenience caused by notifications of stop and restart of wireless power transmission that pop up in the wireless power reception apparatus every time the wireless power transmission unit is changed in the conventional art, and an issue of repetition of the procedure of ping, identification and configuration may be addressed.

When the wireless power transmission unit is changed from the first wireless power transmission unit (1, 1) to the second wireless power transmission unit (2, 1), the controller 17 may seamlessly transmit wireless power to the wireless power reception apparatus 300.

The controller 17 may stop the first wireless power transmission unit (1, 1) from performing wireless power transmission. In addition, the controller 17 may control the first wireless power transmission unit (1, 1) and the second wireless power transmission unit (2, 1) to transmit wireless power together. In this case, the wireless power reception apparatus 300 should be provided with a module capable of receiving wireless power from a plurality of wireless power transmission units (1, 1) and (2, 1).

When the wireless power transmission unit is changed, the controller 17 may transmit, to the wireless power reception apparatus 300, information indicating that the wireless power transmission unit has been changed. In the in-band scheme, the controller 17 may transmit the information together with a power signal to the wireless power reception apparatus 300. In the out-of-band scheme, the controller 17 may transmit the corresponding information on a channel separate from the power transmission channel.

While it is illustrated in this embodiment that wireless power is transmitted using only the first wireless power transmission unit (1, 1) or the second wireless power transmission unit (2, 1), wireless power may be transmitted using a plurality of wireless power transmission units.

The controller 17 transmits wireless power to the wireless power reception apparatus through at least one wireless power transmission unit, and when the wireless power reception apparatus is moved in a specific direction during wireless power transmission, the controller senses an induced current that is induced in each of the at least one wireless power transmission units disposed in a specific direction.

Thereafter, if the magnitude of the induced current sensed in each of the at least one wireless power transmission unit disposed in the specific direction exceeds a preset reference, the controller 17 transmits wireless power to the wireless power reception apparatus through the at least one wireless power transmission unit exceeding the preset reference. Sensing of movement of the wireless power receiving unit 300 and change of the wireless power transmission unit are similar to the case of FIG. 12, and will not be described below.

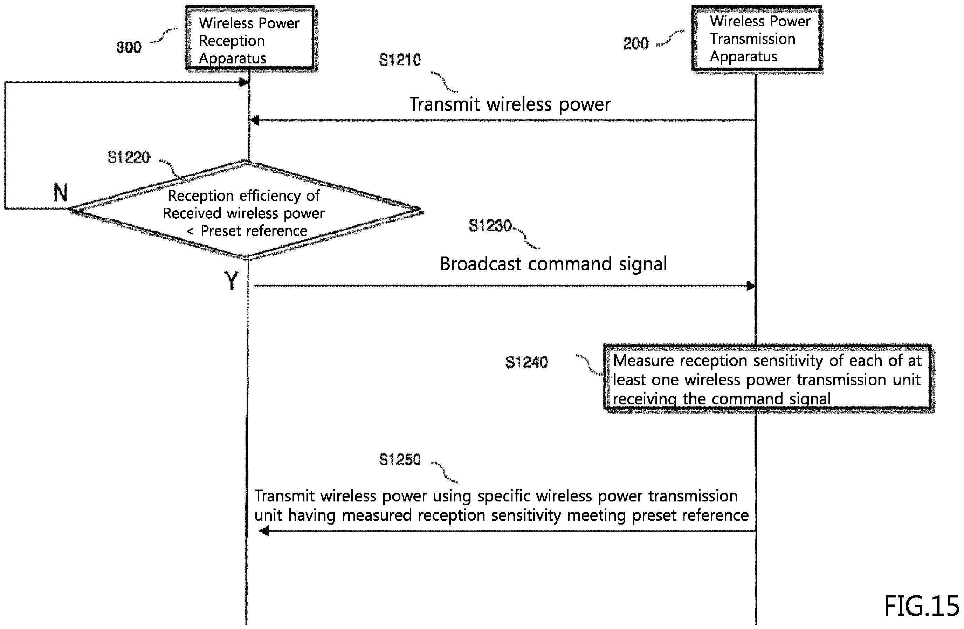

FIG. 15 is a flowchart illustrating the operation of a wireless power system when the wireless power reception apparatus is moved while being charged in the resonance scheme according to an embodiment.

As described above, the resonance scheme refers to a communication scheme in which the wireless power transmission apparatus 200 and the wireless power reception apparatus 300 transmit power signals in the resonance frequency band, and exchange information necessary for power transmission using a separate frequency band (out-of-band) other than the resonance frequency band.

Referring to FIG. 15, the wireless power transmission apparatus transmits wireless power (S1210).

In the case where the wireless power reception apparatus 200 is moved, if the reception efficiency of the wireless power received from the first wireless power transmission unit is lower than a predetermined reference (S1220), the wireless power reception apparatus 200 determines that the wireless power reception apparatus 200 is moving, and broadcasts a command signal to search for a wireless power transmission unit having the highest wireless power transmission efficiency (S1230). The command signal may use a short-range communication scheme such as Bluetooth, Zigbee, Wireless LAN, and NFC (Near Field Communication), but is not limited thereto.

If the reception efficiency of the received wireless power is higher than a preset reference (S1220), the wireless power reception apparatus 300 continues to receive the wireless power.

The plurality of wireless power transmission units of the wireless power transmission apparatus that have received the command signal transmits the reception sensitivities (reception sensitivities at which the command signal is received) to the controller 17 of the wireless power transmission apparatus (S1240).

The controller 17 transmits wireless power to the wireless power reception apparatus 300 using a specific wireless power transmission unit that has a reception sensitivity satisfying a preset reference (S1250).

Hereinafter, a wireless power transmission system for seamlessly transmitting wireless power to a wireless power reception apparatus that is being moved will be described with reference to FIGs. 16 and 17.

The wireless power transmission system includes a plurality of wireless power transmission apparatuses each including a controller.

As shown in FIG. 16, a second wireless power transmission apparatus 1610 transmits wireless power to the wireless power reception apparatus 1620.

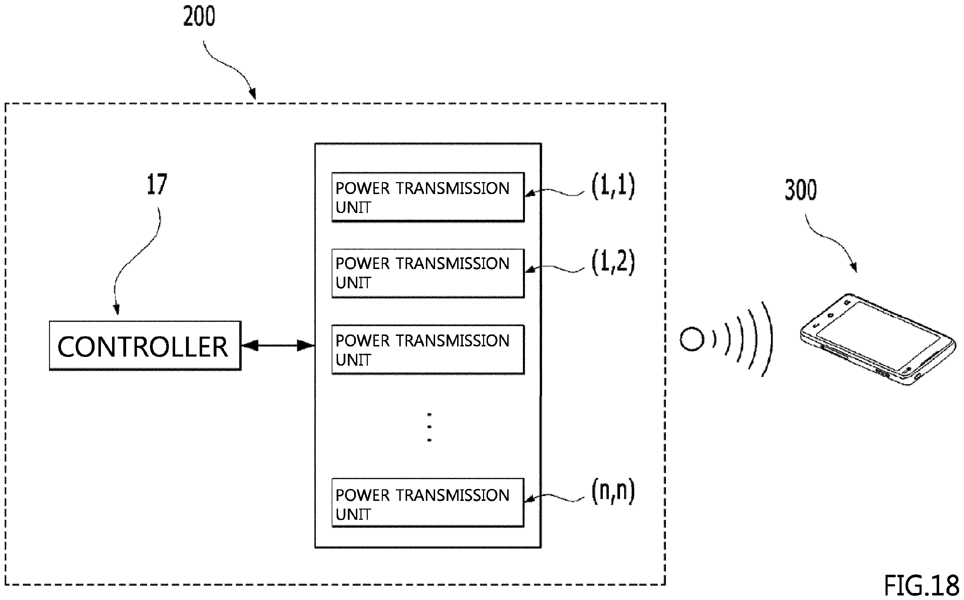

The controller 17 shown in FIG. 14 or 18 may be configured separately for each current measurement unit and may constitute individual wireless power transmission apparatuses as shown in FIG. 16. The controllers of the respective wireless power transmission apparatuses may be connected to each other and thus may communicate with each other. The communication connection may be a wired/wireless communication connection or may be established by one main transmission apparatus serving as a hub and other transmission apparatuses connected thereto.

In this case, when the wireless power reception apparatus 1620 is moved toward the third wireless power transmission apparatus 1650 as shown in FIG. 17, the third wireless power transmission apparatus 1650 may measure an induced current generated by the wireless power reception apparatus 1620. The third wireless power transmission apparatus 1650 may periodically measure the value of the induced current (or the amount of change in impedance).

If the value of the induced current exceeds a predetermined value, the third wireless power transmission apparatus 1650 may make a request for device information about the wireless power reception apparatus 1620 to the second wireless power transmission apparatus 1610. The device information is information necessary for transmission of wireless power to the wireless power reception apparatus 1620.

Before transmission of the device information, the second wireless power transmission apparatus 1610 and the third wireless power transmission apparatus 1650 may exchange efficiency of wireless power transmission with each other. The apparatus exhibiting higher efficiency wireless power transmission may be allowed to perform wireless power transmission, but embodiments are not limited thereto.

If the third wireless power transmission apparatus 1650 is allowed to transmit wireless power to the wireless power reception apparatus 1620, wireless power may be seamlessly transmitted.

Since the third wireless power transmission apparatus 1650 receives the device information from the second wireless power transmission apparatus 1610, initial setting for wireless power transmission may be omitted. For example, operations in ping transmission, identification and configuration steps may be unnecessary.

The device information of the wireless power reception apparatus 1620 may include at least one of reception sensitivity information about the Bluetooth signal, identification information about the wireless power reception apparatus, information about the power required by the wireless power reception apparatus, information about a charging state of the wireless power reception apparatus, information about a version of software installed on the wireless power reception apparatus, authentication and security information about the wireless power reception apparatus, neighboring and/or candidate wireless power transmission apparatus list information corresponding to the wireless power reception apparatus, sub-in-band channel allocation information allocated to the wireless power reception apparatus, and Bluetooth communication connection information corresponding to the wireless power reception apparatus. FIG. 18 is a block diagram of a wireless power transmission system according to an embodiment.

Referring to FIG. 18, the wireless power transmission apparatus 200 may include a controller 17 and a plurality of power transmission units (1, 1) to (n, n) . Alternatively, each power transmission unit may be provided with one controller in the wireless power transmission apparatus, and a plurality of transmission apparatuses may be connected.

In addition, the wireless power transmission apparatus 200 may transmit power to the wireless power reception apparatus 300.

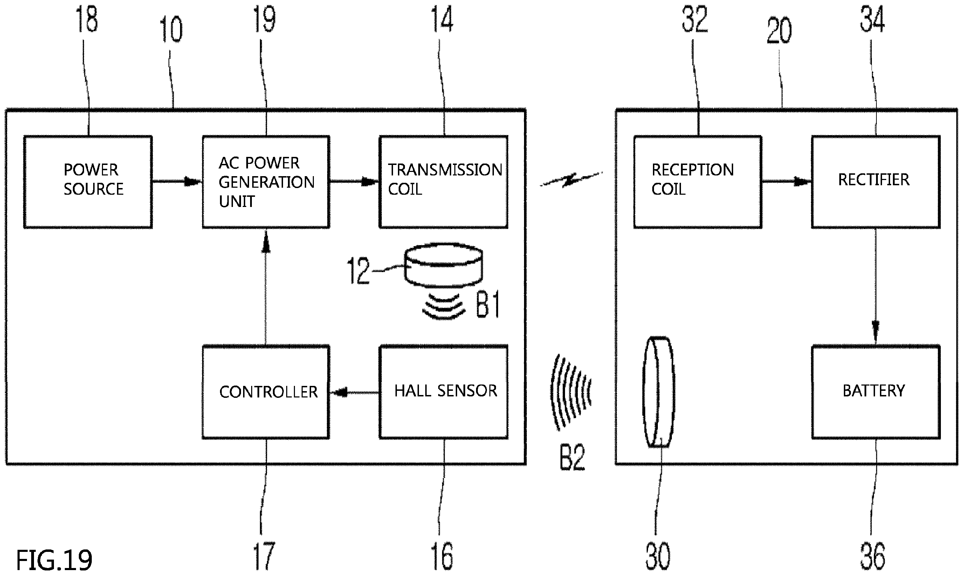

FIG. 19 is a detailed block diagram of the wireless power transmission system of FIG. 168.

Since the outer shape of the charging pad 510 and the wireless power reception apparatus 300 have already been described, the circuit configurations in the charging pad 510 and the wireless power reception apparatus 300 will be described below.

The charging pad 510 may include a power source, an AC power generation unit 19, a controller 17, a transmission coil 14, a first magnet 12, and a Hall sensor 16.

Each of the power transmission units (1, 1) to (n, n) may include a power source, an AC power generation unit 19, and a transmission coil 14. Alternatively, the power source may be shared and each of the power transmission units may include an AC power generation unit and a transmission coil. Alternatively, the power source and the AC power generation unit may be shared and each of the power transmission units may include a transmission coil.

The power source generates AC power or DC power. The rectifier may convert the AC power into a first DC power and convert the first DC power into a second DC power.

The AC power generation unit 19 may convert the power of the power source into AC power under control of the controller 17. The AC power obtained through conversion in the AC power generation unit 19 may be transmitted to the terminal 20 via the transmission coil 14.

The controller 17 may control the AC power generation unit 19 based on variation in the magnetic flux densities B1 and B2 detected by the Hall sensor 16.

Further, the controller 17 may control the AC power generation unit 19 using the variation in impedance even if the Hall sensor 16 is used.

The method according to an embodiment of the present disclosure may be implemented as a program to be executed on a computer and stored in a computer-readable recording medium. Examples of the computer-readable recording medium include ROM, RAM, CD-ROM, magnetic tapes, floppy disks, and optical data storage devices, and also include carrier-wave type implementation (e.g., transmission over the Internet).

The computer-readable recording medium may be distributed to a computer system connected over a network, and computer-readable code may be stored thereon and executed in a distributed manner. Functional programs, code, and code segments for implementing the method described above may be easily inferred by programmers in the art to which the embodiments pertain.

It will be apparent to those skilled in the art that the present disclosure may be embodied in specific forms other than those set forth herein without departing from the spirit and essential characteristics of the present disclosure.

Therefore, the above embodiments should be construed in all aspects as illustrative and not restrictive. The scope of the disclosure should be determined by the appended claims and their equivalents, and all changes coming within the meaning and equivalency range of the appended claims are intended to be embraced therein.

[Industrial Applicability]

The present disclosure relates to a wireless charging technique, and is applicable to an apparatus and system for controlling wireless power transmission.

**Claims**

1. A method of controlling a wireless power transmission apparatus including a plurality of wireless power transmission units, the method comprising:

   transmitting wireless power to a wireless power reception apparatus through a first wireless power transmission unit;
   sensing an induced current induced in a second wireless power transmission unit when the wireless power reception unit is moved toward the second wireless power transmission unit; and
   transmitting wireless power to the wireless power reception apparatus through the second wireless power transmission unit when a magnitude of the induced current sensed in the second wireless power transmission unit meets a preset criterion.

**2.** The method according to claim 1, wherein the transmitting of the wireless power to the wireless power reception apparatus through the first wireless power transmission unit comprises:

transmitting the wireless power to the wireless power reception apparatus according to an electromagnetic induction scheme using a current applied to the first wireless power transmission unit.

**3.** The method according to claim 1, wherein the transmitting of the wireless power to the wireless power reception apparatus through the second wireless power transmission unit comprises:

seamlessly transmitting the wireless power to the wireless power reception apparatus even when a transmission channel is changed from the first wireless power transmission unit to the second wireless power transmission unit.

**4.** The method according to claim 1, further comprising:

stopping transmitting the wireless power through the first wireless power transmission unit when the wireless power is transmitted to the wireless power reception apparatus through the second wireless power transmission unit.

**5.** The method according to claim 1, wherein the transmitting of the wireless power to the wireless power reception apparatus through the second wireless power transmission unit comprises:

transmitting the wireless power to the wireless power reception apparatus through the first wireless power transmission unit while transmitting the wireless power to the wireless power reception apparatus through the second wireless power transmission unit.

**6.** The method according to claim 1, further comprising:

transmitting a notification signal to the wireless power reception apparatus when a wireless power transmission channel is changed to the second wireless power transmission unit.

**7.** A wireless power transmission apparatus including a plurality of wireless power transmission units, comprising:

a first wireless power transmission unit connected to a first sensing unit to transmit wireless power to a wireless power reception apparatus; a second wireless power transmission unit connected to a second sensing unit;

a controller configured to control the second sensing unit to sense an induced current induced in the second wireless power transmission unit when the wireless power reception apparatus is moved toward the second wireless power transmission unit while the wireless power is being transmitted to the wireless power reception apparatus, wherein the controller transmits the wireless power to the wireless power reception apparatus through the second wireless power transmission unit when a magnitude of the sensed induced current exceeds a preset reference.

**8.** The wireless power transmission apparatus according to claim 7, wherein the controller transmits the wireless power to the wireless power reception apparatus according to an electromagnetic induction scheme using a current applied to the first wireless power transmission unit.

**9.** The wireless power transmission apparatus according to claim 7, wherein the controller seamlessly transmits the wireless power to the wireless power reception apparatus even when a transmission channel is changed from the first wireless power transmission unit to the second wireless power transmission unit.

**10.** The wireless power transmission apparatus according to claim 7, wherein, when the wireless power is transmitted to the wireless power reception apparatus through the second wireless power transmission unit, the controller stops transmitting the wireless power through the first wireless power transmission unit.

**11.** The wireless power transmission apparatus according to claim 7, wherein the controller transmits the wireless power to the wireless power reception apparatus through the first wireless power transmission unit while transmitting the wireless power to the wireless power reception apparatus through the second wireless power transmission unit.

**12.** The wireless power transmission apparatus according to claim 7, wherein the controller transmits a notification signal to the wireless power reception apparatus when a wireless power transmission channel is changed to the second wireless power transmission unit.

**13.** A method for controlling a wireless power transmission apparatus including a plurality of wireless power transmission units, the method comprising:

transmitting wireless power to a wireless power reception apparatus through at least one of the wireless power transmission units;

sensing, when the wireless power reception apparatus is moved in a specific direction during transmission of the wireless power, an induced current induced in each of at least one of the wireless power transmission units arranged on a side corresponding to the specific direction; and

transmitting, when a magnitude of the induced current sensed in at least one of the wireless power transmission units arranged on the side corresponding to the specific direction exceeds a preset reference, the wireless power to the wireless power reception apparatus through the at least one wireless power transmission unit having the induced current exceeding the preset reference.

14. A wireless power transmission apparatus including a plurality of wireless power transmission units, comprising:

at least one first wireless power transmission unit configured to transmit wireless power to a wireless power reception apparatus;

at least one second wireless power transmission unit arranged on a side corresponding to a specific direction and connected to each of at least one sensing unit in a one-to-one correspondence manner; and

a controller configured to sense, when the wireless power reception apparatus is moved in the specific direction during transmission of the wireless power, an induced current induced in at least one of the at least one second wireless power transmission unit, through at least one of the at least one sensing unit,

wherein, when a magnitude of the induced current sensed in at least one of the at least one second wireless power transmission unit arranged on the side corresponding to the specific direction exceeds a preset reference, the controller transmits the wireless power to the wireless power reception apparatus through the at least one wireless power transmission unit having the induced current exceeding the preset reference.

15. A method for controlling a wireless power reception apparatus for receiving wireless power from a wireless power transmission apparatus including a plurality of wireless power transmission units, the method comprising:

receiving the wireless power from the wireless power transmission apparatus; and

broadcasting a command signal when a reception efficiency of the received wireless power is less than a preset reference value.

16. A method for controlling a wireless power transmission apparatus including a plurality of wireless power transmission units, the method comprising:

receiving, by at least one of the wireless power transmission units, a command signal transmitted from a wireless power reception apparatus;

measuring a reception sensitivity of each of the at least one wireless power transmission unit receiving the command signal; and

transmitting the wireless power to the wireless power reception apparatus using a specific wireless power transmission unit having the measured reception sensitivity that meets a predetermined criterion.

17. A method for transmitting wireless power in a wireless power transmission system including a plurality of wireless power transmission apparatuses, the method comprising:

transmitting the wireless power to a wireless power reception apparatus through a first wireless power transmission apparatus;

sensing, when the wireless power reception apparatus is moved toward a second wireless power transmission apparatus during transmission of the wireless power, an induced current induced in the second wireless power transmission apparatus; and

transmitting, when a magnitude of an induced current sensed in the second wireless power transmission apparatus meets a preset criterion, the wireless power to the wireless power reception apparatus through the second wireless power transmission apparatus.

18. The method according to claim 17, further comprising:

the second wireless power transmission apparatus receiving device information about the wireless power reception apparatus from the first wireless power transmission apparatus.

19. A wireless power transmission system including a plurality of wireless power transmission apparatuses, comprising:

a first wireless power transmission apparatus configured to transmit wireless power to a wireless power reception apparatus; and

a second wireless power transmission apparatus disposed on a side corresponding to a direction of movement of the wireless power reception apparatus to sense an induced current when the wireless power reception apparatus is moved during transmission of the wireless power,

wherein, when a magnitude of the sensed induced current meets a predetermined criterion, the wireless power transmission apparatus transmits the wireless power to the wireless power reception apparatus.

20. The wireless power transmission system according to claim 19, wherein the second wireless power transmission apparatus receives device information about the wireless power reception apparatus from the first wireless power transmission apparatus.

FIG.1

FIG.2

FIG.3

FIG.4

FIG.6

FIG.5

FIG.7

FIG.8

FIG.9

FIG.10

EP 3 297 124 A1

Start

Recognize wireless power reception apparatus through a plurality of power transmission units included in charging pad — S810

Specify at least one power transmission group to transmit power to the wireless power reception apparatus — S820

Control phase of the power transmission group with respect to the wireless power reception apparatus — S830

Adjust the power of the power transmission group to be transmitted to the wireless power reception apparatus — S840

End

FIG.11

EP 3 297 124 A1

```
                        ┌─────────────┐
                        │    Start    │
                        └─────────────┘
                               │
                               ▼
   ┌──────────────────────────────────────────────────────────┐
   │ Transmit wireless power to wireless power reception       │ ─── S910
   │ apparatus through first wireless power transmission unit   │
   └──────────────────────────────────────────────────────────┘
                               │
                               ▼
   ┌──────────────────────────────────────────────────────────┐
   │ Sense induced current induced in second wireless power    │
   │ transmission unit when the wireless power reception unit   │ ─── S920
   │ is moved toward the second wireless power transmission unit │
   └──────────────────────────────────────────────────────────┘
                               │
                               ▼
   ┌──────────────────────────────────────────────────────────┐
   │ Transmit wireless power to the wireless power reception    │
   │ apparatus through the second wireless power transmission   │ ─── S930
   │ unit when the magnitude of the sensed induced current      │
   │ meets preset criterion                                     │
   └──────────────────────────────────────────────────────────┘
                               │
                               ▼
                        ┌─────────────┐
                        │     End     │
                        └─────────────┘
```

FIG.12

FIG.13

EP 3 297 124 A1

FIG.14

300 — Wireless Power Reception Apparatus

200 — Wireless Power Transmission Apparatus

S1210

Transmit wireless power

S1220

N

Reception efficiency of Received wireless power < Preset reference

Y

S1230

Broadcast command signal

S1240 — Measure reception sensitivity of each of at least one wireless power transmission unit receiving the command signal

S1250

Transmit wireless power using specific wireless power transmission unit having measured reception sensitivity meeting preset reference

FIG.15

FIG.16

FIG.17

200

17

CONTROLLER

POWER TRANSMISSION UNIT — (1,1)

POWER TRANSMISSION UNIT — (1,2)

POWER TRANSMISSION UNIT

⋮

POWER TRANSMISSION UNIT — (n,n)

300

FIG.18

FIG.19

## INTERNATIONAL SEARCH REPORT

| International application No. |
| --- |
| **PCT/KR2016/004583** |

**A.    CLASSIFICATION OF SUBJECT MATTER**

*H02J 17/00(2006.01)i, H02J 7/02(2006.01)i*

According to International Patent Classification (IPC) or to both national classification and IPC

**B.    FIELDS SEARCHED**

Minimum documentation searched (classification system followed by classification symbols)
H02J 17/00; B60L 11/18; H04B 5/00; H02J 7/00; H02J 7/02

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: wireless power, transmission, reception, control, moving, induced current, efficiency, broadcasting

**C.    DOCUMENTS CONSIDERED TO BE RELEVANT**

| Category* | Citation of document, with indication, where appropriate, of the relevant passages | Relevant to claim No. |
| --- | --- | --- |
| Y | KR 10-2014-0142006 A (TECHNOVALUE CO., LTD.) 11 December 2014 See paragraphs [18]-[51], claims 1-10, figures 1-3. | 1-14,17-20 |
| A | | 15-16 |
| Y | KR 10-2015-0038050 A (QUALCOMM INCORPORATED) 08 April 2015 See paragraphs [79]-[112], claims 8-22, figures 7-22. | 1-14,17-20 |
| X | KR 10-2013-0006326 A (SAMSUNG ELECTRONICS CO., LTD.) 16 January 2013 See paragraphs [44]-[164], claims 1-27, figures 3-13. | 15-16 |
| Y | | 3,9,18,20 |
| A | JP 2015-027187 A (NEC PLATFORMS LTD.) 05 February 2015 See abstract, paragraphs [12]-[42], figures 1-6. | 1-20 |
| A | WO 2011-143547 A1 (QUALCOMM INCORPORATED et al.) 17 November 2011 See paragraphs [68]-[81], figures 7A-13. | 1-20 |

☐  Further documents are listed in the continuation of Box C.        ☒  See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 08 AUGUST 2016 (08.08.2016) | **08 AUGUST 2016 (08.08.2016)** |

| Name and mailing address of the ISA/KR | Authorized officer |
| --- | --- |
| Korean Intellectual Property Office Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (January 2015)

**INTERNATIONAL SEARCH REPORT**
Information on patent family members

International application No.

**PCT/KR2016/004583**

| Patent document cited in search report | Publication date | Patent family member | Publication date |
|---|---|---|---|
| KR 10-2014-0142006 A | 11/12/2014 | NONE | |
| KR 10-2015-0038050 A | 08/04/2015 | CN 104471822 A | 25/03/2015 |
| | | EP 2873131 A1 | 20/05/2015 |
| | | TW 201405997 A | 01/02/2014 |
| | | US 2014-0015328 A1 | 16/01/2014 |
| | | WO 2014-014615 A1 | 23/01/2014 |
| KR 10-2013-0006326 A | 16/01/2013 | CN 103782486 A | 07/05/2014 |
| | | EP 2731231 A2 | 14/05/2014 |
| | | JP 2014-521290 A | 25/08/2014 |
| | | KR 10-2013-0006363 A | 16/01/2013 |
| | | US 2014-0346888 A1 | 27/11/2014 |
| | | WO 2013-006004 A2 | 10/01/2013 |
| | | WO 2013-006004 A3 | 14/03/2013 |
| JP 2015-027187 A | 05/02/2015 | NONE | |
| WO 2011-143547 A1 | 17/11/2011 | CN 102948084 A | 27/02/2013 |
| | | CN 102948084 B | 22/10/2014 |
| | | CN 104283330 A | 14/01/2015 |
| | | EP 2569870 A1 | 20/03/2013 |
| | | EP 2569870 B1 | 21/01/2015 |
| | | EP 2890021 A1 | 01/07/2015 |
| | | JP 2013-534074 A | 29/08/2013 |
| | | JP 2015-008629 A | 15/01/2015 |
| | | JP 5615972 B2 | 29/10/2014 |
| | | JP 5911541 B2 | 27/04/2016 |
| | | KR 10-1579644 B1 | 22/12/2015 |
| | | KR 10-2013-0084606 A | 25/07/2013 |
| | | KR 10-2015-0055075 A | 20/05/2015 |
| | | US 2011-0281535 A1 | 17/11/2011 |
| | | US 2015-0115884 A1 | 30/04/2015 |
| | | US 8934857 B2 | 13/01/2015 |
| | | US 9337666 B2 | 10/05/2016 |

Form PCT/ISA/210 (patent family annex) (January 2015)